# EUROPÄISCHE PATENTSCHRIFT

(11) **EP 1 396 325 B1**
(45) Veröffentlichungstag und Bekanntmachung des Hinweises auf die Patenterteilung: **01.07.2009**
(21) Anmeldenummer: 03102670.1
(22) Anmeldetag: 29.08.2003
(51) Int. Cl.: B29C 44/12, E04B 1/94

(54) **Verfahren zur Herstellung einer Brandschutzplatte**
Method of making a fire resistant panel
Procédé de production de panneau coupe-feu

(30) Priorität: 03.09.2002 DE 10240522
(43) Veröffentlichungstag der Anmeldung: 10.03.2004
(73) Patentinhaber: HILTI Aktiengesellschaft, 9494 Schaan (LI)
(72) Erfinder: Fischer, Marco, 86161 Augsburg (DE); Münzenberger, Herbert, 65191, Wiesbaden (DE)
(74) Vertreter: Wildi, Roland

(56) Entgegenhaltungen:
- EP-A- 0 019 748
- GB-A- 1 167 701
- US-A- 5 916 927

## Beschreibung

### Technisches Gebiet

Die Erfindung betrifft ein Verfahren zur Herstellung einer organisch gebundenen, flexiblen Brandschutzplatte mit einem anorganischen Füllstoff gemäss dem Oberbegriff des Anspruchs 1.

### Stand der Technik

Organische Polymerschaumprodukte sind in sehr vielen Bereichen des täglichen Lebens zu finden. Offenporige Weichschäume finden beispielsweise für Matratzen oder Autositze Anwendung. Integralschäume werden z. B. für Automobilcockpits, Möbellehnen oder als Dämpfungselemente bei Automobilstossstangen verwendet. Im Bausektor kommen die organischen Polymerschaumprodukte als Ortsschäume, als Fugenabdichtung oder als Isolationsplatten zur Anwendung.

Nachteilig an der bekannten Lösung ist, dass im Bereich des passiven Brandschutzes die Schaumprodukte aufgrund der begrenzten Feuerwiderstandsfähigkeit im Brandtest nach DIN 4102, Teil 9 und 11, nicht eingesetzt werden können. Es ist nun bekannt, ein Plattenmaterial aus organischem Matrixmaterial und anorganischem Füllstoff herzustellen, dass die erforderliche Feuerwiderstandsfähigkeit aufweist, jedoch eine hohe Dichte und eine schlechte Isolationswirkung hat. Die bekannten Verfahren zur Herstellung des Plattenmaterials beruhen auf in einem vorgeschalteten Mischprozess, wie beispielsweise Kneten, Rühren, Extrudieren usw., und einem nachfolgenden Verdichtungs- und Trocknungsschritt. Wird nun ein leichtes, schaumartiges, anorganisches Füllmaterial zur Herstellung des Plattenmaterials verwendet, wird dies bei den bekannten Verfahren leicht zerstört.

Im Bereich des PUR-Reaktionsspritzguss sind Technologien bekannt, bei dem die Füllstoffe über ein kontinuierlichen Einspritzvorgang in einem Mischkopf homogen mit der organischen Matrix vermischt werden. Nachteilig an diesen Technologien ist, dass ein Volumenverhältnis vom Füllstoff zum PUR-System grösser als 1 nicht mehr verarbeitbar ist. Des Weiteren muss der zu mischende Füllstoff eine ausreichende Druckfestigkeit aufweisen und ein Füllstoff mit einer geringeren Dichte als 0.4 g/cm³ sowie mit einem Durchmesser im Millimeterbereich kann nicht verwendet werden.

Aus der US 5,916,927 ist eine organisch gebundene, flexible Brandschutzplatte mit keramischen mikro-hohlen Partikeln als anorganischen Füllstoff, die eine spezifische Dichte von 0.3 g/cm3 bis 0.5 g/cm3 aufweisen, sowie ein Verfahren zur Herstellung bekannt. Die keramischen Partikel weisen eine kugelförmige Gestalt, eine Partikelgrösse von 0.005 mm bis 0.35 mm sowie eine Druckfestigkeit von 80 bis 300 kgf/cm2 auf. Zur Herstellung eines plattenförmigen Produkts werden die Komponenten mit Wasser vermischt, geknetet und diese gemischte Masse in eine Pressform gegossen, worin unter Zuführung von Wärme die gemischte Masse zu dem plattenförmigen Produkt verpresst wird.

Aus der EP-A-0019748 ist eine faserverstärkte, organisch gebundene Platte und ein Verfahren zur Herstellung bekannt, bei dem in einem ersten Schritt die Fasern verpresst werden, bis das Volumen der Hohlräume i. W. dem Volumen der aufschäumbaren, organischen Bindematrix entspricht. Beispielsweise wird die Bindematrix vor dem Verpressen auf die Fasern aufgebracht. In einem anderen Beispiel werden die Fasern zuerst verpresst und dann die Bindematrix durch eine Öffnung im Boden der Form in die verpressten Fasern eingebracht. Unter Druck und ggf. unter Zuführung von Wärme wird die Bindematrix aufgeschäumt und füllt dabei noch allfällig vorhandene Hohlräume zwischen den verpressten Fasern aus. In weiteren Beispielen wird zuerst eine Schicht von anorganischem Füllstoff mit einer Partikelgrösse von 1 mm in die Form eingebracht, diese mit vier Lagen Glasfilamentmatte bedeckt und anschliessend die Bindematrix eingegossen.

### Darstellung der Erfindung

Aufgabe der Erfindung ist es, ein Herstellungsverfahren für eine Brandschutzplatte zu schaffen, die einen grossen Volumenanteil eines leichten, schaumartigen, anorganischen Füllmaterials aufweist, das in einem organischen Bindemittel homogen verteilt ist.

Die Aufgabe ist durch die Merkmale des Anspruchs 1 gelöst. Gemäss der Erfindung umfasst das Verfahren zur Herstellung einer organisch gebundenen, flexiblen Brandschutzplatte mit einem anorganischen Füllstoff, die folgenden Schritte:

In einem ersten Schritt wird eine definierten Menge einer aufschäumbaren, organischen Bindematrix, optional mittels eines Dosiersystems, in eine als Plattenform ausgebildete Werkzeugform eingebracht. Die Werkzeugform weist vorzugsweise eine rechteckige Grundform auf und umfasst einen Boden sowie den Boden umschliessende Seitenwände. Die Höhe der Seitenwände ist grösser als die Dicke der herzustellenden Brandschutzplatte ausgebildet. Die organische Bindematrix ist aus mehreren Komponenten zusammengesetzt, die bevorzugt vor dem Einbringen in die Werkzeugform im gewünschten Verhältnis gemischt werden. Zur Gewährleistung einer gleichbleibenden Qualität mehrerer mit dem erfindungsgemässen Verfahren hergestellten Brandschutzplatten wird die organische Bindematrix vorzugsweise mittels einem Dosiersystem in die Werkzeugform gefüllt.

In einem zweiten Schritt wird die organische Bindematrix gleichmässig auf dem Boden der Werkzeugform verteilt, so dass über den ganzen Boden die gleiche Schichtstärke der organischen Bindematrix vorhanden ist.

Anschliessend wird die Werkzeugform mit einer adäquaten Menge eines anorganischen Füllstoffs aufgefüllt. Das Volumenverhältnis von dem anorganischen Füllstoff zu der organischen Bindematrix beträgt etwa 9:1. Die organische Bindematrix dient hauptsächlich der Verklebung der Partikel des anorganischen Füllstoffs. Daneben dient die organische Bindematrix der optimalen Oberflächengestaltung der Platte. Die Menge des anorganischen Füllstoffs muss so bemessen sein, dass diese als lockere Schüttung die Werkzeugform vollständig ausfüllt. Da die Werkzeugform gegenüber der herzustellenden Plattendicke über erhöhte Seitenwände verfügt, kann die Werkzeugform gleichmässig bis zum oberen Rand gefüllt werden.

Im nächsten Schritt des erfindungsgemässen Verfahren wird die Werkzeugform mit einem Deckel unter Verringerung des Volumens des Innenraums der Werkzeugform geschlossen. Der Deckel ist mit einem Einsatz versehen, der beim Schliessen des Deckels den anorganischen Füllstoff in die organische Bindematrix einpresst, ohne diesen dabei zu stark bis zu dessen Zerstörung hin zu verpressen.

Als nächster Schritt wird die organische Bindematrix aufgeschäumt. Die Zusammensetzung der organischen Bindematrix ist derart gewählt, dass diese chemisch oder physikalisch aufgeschäumt werden kann. Die Schaumreaktion ist mittels Katalysatoren so eingestellt, dass genügend Zeit für das vollständige Zudosieren des anorganischen Füllstoffs in die Werkzeugform verbleibt, und dass die vollständig durchschäumte Brandschutzplatte nach dem Verschluss der Werkzeugform möglichst schnell aus dieser entformt werden kann.

Anschliessend wird das Werkzeug geöffnet und die fertige Brandschutzplatte kann entnommen werden.

Bei dem erfindungsgemässen Verfahren ist kein mechanisches Mischverfahren vorgeschaltet, das den vorzugsweise leichten, schaumartigen, anorganischen Füllstoff zerstören kann und so die Dichte der Brandschutzplatte erhöht. Weiter weist die organische Bindematrix eine relativ hohe Viskosität im Bereich von 1000 bis 5000 mPa s auf, die mit den mechanisch labilen Charakter des anorganischen Füllstoffs einen vorgeschalteten Mischprozess verunmöglicht. Die mit dem Verfahren hergestellte Brandschutzplatte weist dementsprechend eine geringe Dichte und eine gute Isolationswirkung auf. Gleichzeitig hat die mit dem Verfahren hergestellte Brandschutzplatte eine der Norm entsprechende Feuerwiderstandsfähigkeit und ist leicht zu bearbeiten. Die mit diesem Verfahren hergestellte Brandschutzplatte kann beispielsweise zur feuersicheren Abschottung von Installationsdurchführungen durch Brandschutzwände verwendet werden. Da kein Intumeszenzprozess stattfindet, besteht die Funktion der Brandschutzplatte dabei allein in der feuerbeständigen Ausführung.

Vorzugsweise wird zur Steuerung des Aufschäumens der organischen Bindematrix die Werkzeugform temperiert. Eine Temperierung des Werkzeugs bietet eine variable Optimierungsmöglichkeit der Reaktionszeit des Schaumprozesses und erfolgt beispielsweise mittels einer elektrischen Erwärmungsvorrichtung, beziehungsweise mittels einer geeigneten Kühlungsvorrichtung. Das Werkzeug wird zur Kontrolle und Beschleunigung der Reaktion auf eine Temperatur von weniger als 100 C, vorzugsweise auf eine Temperatur von 40 C bis 50 C, gehalten.

Bevorzugt wird als organische Bindematrix ein Polymer, vorzugsweise ein Polyurethan oder Phenolharz, verwendet. Die Polyolkomponente der organischen Bindematrix kann mit den folgenden Füllstoffen ausgerüstet sein: Säurebildner, Flammschutzmittel, Aschekrustestabilisator und mikroporenbildender, hochtemperaturempfindlicher Füllstoff. Als Säurebildner wird z. B. ein Salz oder ein Ester einer anorganischen, nicht flüchtigen Säure, ausgewählt aus Phosphorsäure oder Borsäure verwendet. Bevorzugt sind Ammoniumphosphat, Ammoniumpolyphosphat, Diaminphosphate, Melaminborat, Borsäureester und dergleichen. Als Flammschutzmittel wird beispielsweise ein halogenhaltiger Phosphorsäureester verwendet. Als A-schekrustestabilisator kommt z. B. ein Oxid oder eine Verbindung eines Metalls aus Alluminium, Magnesium, Eisen und Zink umfassende Gruppe zum Einsatz. Bevorzugt sind Eisenoxid, Eisentrioxid, Titanoxid oder ein Borat (wie z. B. Zinkborat). Als mikroporenbildender, hochtemperaturempfindlicher Füllstoff werden beispielsweise anorganische Mikrohohlkugeln verwendet, z. B. Alluminiumsilikat-, Glas- oder Flugaschehohlkugeln mit Partikelgrössen von 50 µm bis 500 µm.

Vorzugsweise wird vor dem Einbringen der organischen Bindematrix und/oder nach dem Einbringen der organischen Bindematrix und/oder nach dem Auffüllen der Werkzeugform mit dem anorganischen Füllstoff eine Gewebe-, Gewirke- oder Vliesmatte in der Werkzeugform verlegt. Eine solche Matte erhöht die mechanische Stabilität der hergestellten Brandschutzplatte, ohne die Schneidbarkeit der Brandschutzplatte wesentlich zu beeinträchtigen. Wird die Matte vor dem Einbringen der organischen Bindematrix und/oder nach dem Auffüllen der Werkzeugform mit dem anorganischen Füllstoff in die Werkzeugform gelegt, weist die fertig hergestellte Brandschutzplatte eine, beziehungsweise zwei homogene Oberflächen auf. Die Matte kann beispielsweise eine Gewebematte aus Glasfasern, beschichteten und unbeschichteten Silikatfasern sein. Des Weiteren ist die Verwendung eines Drahtgeflechts denkbar.

.

Die Matte kann an den Oberflächen und/oder in der Brandschutzplatte angeordnet sein. Vorzugsweise wird eine Gewebe, Gewirke- oder Vliesmatte verwendet, die schwer entflammbar ist.

Beispielsweise umfasst eine organisch gebundene, flexible Brandschutzplatte einen anorganischen Füllstoff, wobei der anorganische Füllstoff eine spezifische Dichte kleiner als 0.4 g/cm³ aufweist. Mit der geringen Dichte des anorganischen Füllstoffs weist die Brandschutzplatte einen guten Isolationswert auf. Als anorganischer Füllstoff werden hochtemperaturbeständige Füllstoffpartikel verwendet, z. B. leichte, nicht brennbare, anorganische Stoffe, wie beispielsweise Perlit, expandierter Vermiculit und dergleichen.

Vorteilhaft ist der anorganische Füllstoff ein poröses Material, das eine unregelmässige Partikelgrösse und Partikelform aufweist, wobei die Partikelgrösse 0.1 mm bis 10.0 mm, optional 1.0 mm bis 6.0 mm, beträgt. Der Begriff der unregelmässigen Partikelgrösse bedeutet, dass mehrere Partikel zusammen den gesamten, vorgenannten Grössenbereich abdecken. Unter einer unregelmässigen Partikelform werden sämtliche dreidimensionale Raumformen verstanden, die der anorganische Füllstoff bei seiner Herstellung aufweisen kann. Neben einer kugelförmigen Ausgestaltung können die Partikel als Polyeder ausgestaltet sein. Da zur Herstellung der Brandschutzplatte kein mechanischer Mischvorgang stattfindet und der leichte, schaumartige, anorganische Füllstoff von der organischen Bindematrix lediglich durchschäumt wird, bleibt die Partikelgrösse und Partikelform des anorganischen Füllstoffs weitgehend erhalten. Die Brandschutzplatte weist eine homogene Struktur auf.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
- Fig. 1: Das Einbringen und Verteilen der organischen Bindematrix;
- Fig. 2: das Auffüllen der Werkzeugform mit einem anorganischen Füllstoff;
- Fig. 3: die geschlossene Werkzeugform;
- Fig. 4: den Aufschäumvorgang der organischen Bindematrix;
- Fig. 5: das Öffnen der Werkzeugform und die Entnahme der gemäss dem erfindungsgemässen Verfahren hergestellten Brandschutzplatte.

Grundsätzlich sind in den Figuren gleiche Teile mit den gleichen Bezugszeichen versehen.

### Wege zur Ausführung der Erfindung

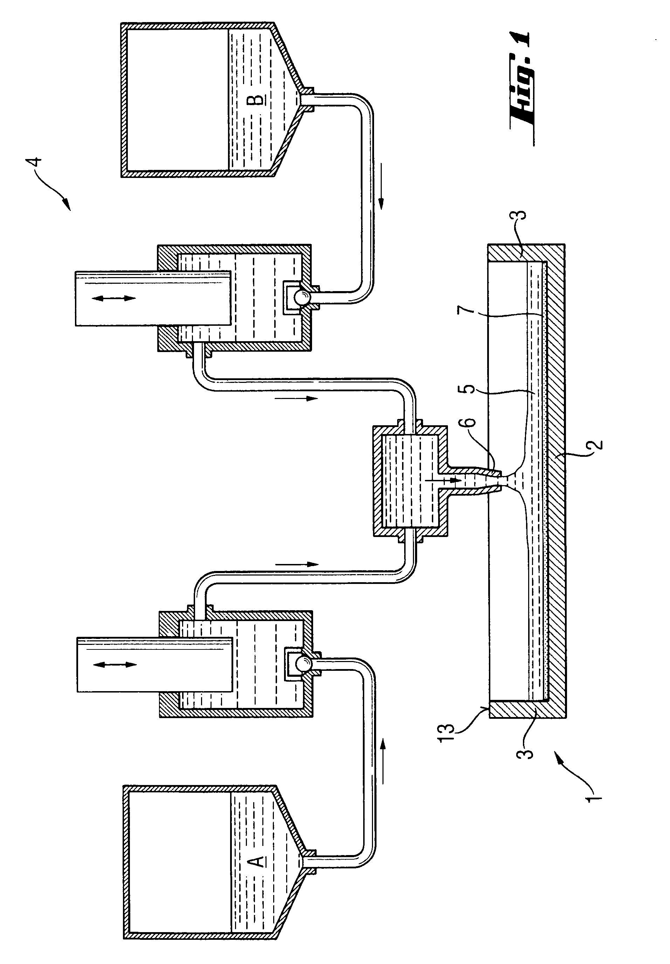

In den Fig. 1 bis 6 sind die einzelnen Verfahrensschritte zur Herstellung einer Brandschutzplatte dargestellt. In der Fig. 1 ist der erste Verfahrensschritt dargestellt. Die Werkzeugform 1 zur Herstellung einer plattenförmigen Brandschutzplatte nach dem erfindungsgemässen Verfahren hat eine im Wesentlichen rechteckige Ausgestaltung mit einer Länge, einer Breite und einer Höhe. Die Werkzeugform 1 umfasst einen Boden 2 und Seitenwände 3, die höher ausgebildet sind, als die Dicke der fertig hergestellten Brandschutzplatte. Aus einem Dosiersystem 4 wird eine definierte Menge einer aufschäumbaren, organischen Bindematrix 5 eingebracht. Die organische Bindematrix besteht aus mehreren Komponenten. In diesem Ausführungsbeispiel wird stellvertretend für alle Komponenten der organischen Bindematrix auf die zwei Komponenten A und B Bezug genommen. Die Komponenten A und B werden in einem Standardverfahren zur Dosierung eines Zweikomponenten-Systems zu einer organischen Bindematrix 5 gemischt. Vor dem Einfüllen der organischen Bindematrix 5 in die Werkzeugform 1 wird auf dem Boden 2 der Werkzeugform 1 ein Glasfasergewebe 7 zur Verbesserung der mechanischen Eigenschaften der Brandschutzplatte verlegt. Über die Düse 6 wird anschliessend die gemischte organische Bindematrix 5 in die Werkzeugform 1 eingebracht und über den Boden 2 gleichmässig verteilt.

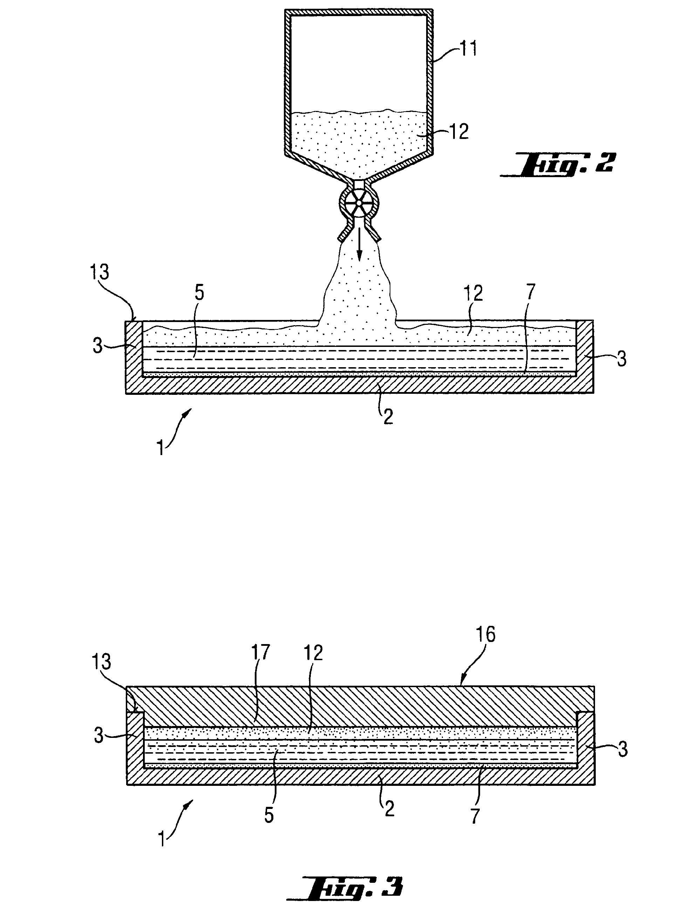

In der Fig. 2 ist der nächste Verfahrensschritt gezeigt. Aus einem Vorratsbehälter 11 wird die Werkzeugform 1 bis zum oberen Rand 13 der Seitenwände 3 mit einem anorganischen Füllstoff 12 aufgefüllt. Die Schaumreaktion der organischen Bindematrix 5 ist so eingestellt, dass genügend Zeit für das vollständige Zudosieren des anorganischen Füllstoffs 12 vorhanden ist.

Die geschlossene Werkzeugform 1 ist in der Fig. 3 dargestellt. Der Deckel 16 zum Schliessen der Werkzeugform 1 weist einen Einsatz 17 auf. Der Deckel 16 ist derart ausgestaltet, dass der, bei der geschlossenen Werkzeugform 1 verbleibende, Zwischenraum zwischen der Oberkante des Bodens 2 und der Unterkante des Deckels 16 der Höhe der herzustellenden Brandschutzplatte entspricht. Beim Schliessen der Werkzeugform 1 mit dem Deckel 16 wird das Volumen des Innenraums der zuvor offenen Werkzeugform 1 verringert. Dabei wird der anorganische Füllstoff 12 in die organische Bindematrix 5 gepresst, ohne dass der anorganische Füllstoff 12 zu stark bis zur Zerstörung hin verpresst wird.

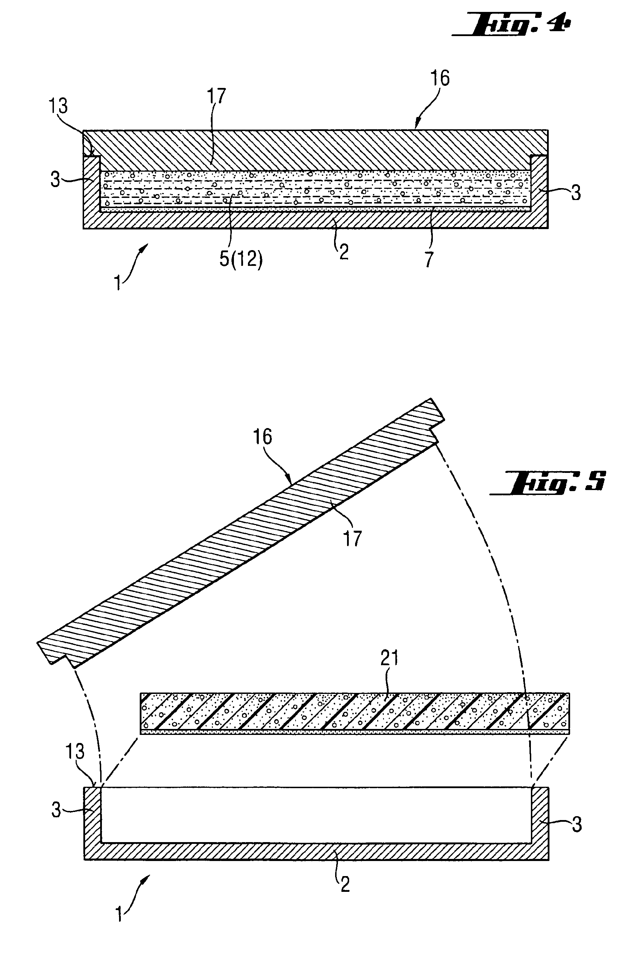

In Fig. 4 ist der Aufschäumvorgang der organischen Bindematrix 5 gezeigt. Nach dem Verschluss der Werkzeugform 1 beginnt der Schaumprozess der organischen Bindematrix 5. Dabei durchdringt die aufgeschäumte, organische Bindematrix die Hohlräume zwischen den einzelnen Partikeln des anorganischen Füllstoffs 12 weitgehend ohne diese zu zerstören. Mit einer Temperierung der Werkzeugform 1 kann die Reaktionszeit des Schaumprozesses der organischen Bindematrix 5 variabel optimiert werden.

Fig. 5 zeigt das Öffnen der Werkzeugform und die Entnahme der gemäss dem erfindungsgemässen Verfahren hergestellten Brandschutzplatte. Nach Beendigung des Schaumprozesses der organischen Bindematrix 5 wird durch die Wegnahme des Deckels 16 die Werkzeugform 1 geöffnet und die fertige Brandschutzplatte 21 aus der Werkzeugform 1 entfernt.

Zusammenfassend ist festzustellen, dass mit dem erfindungsgemässen Verfahren eine Brandschutzplatte geschaffen wurde, die trotz der Optimierung der physikalischen Eigenschaften in Bezug auf Dichte und Isolationswirkung bei gleichzeitiger Feuerwiderstandsfähigkeit und leichter Bearbeitbarkeit einen grossen Volumenanteil eines leichten, schaumartigen, anorganischen Füllmaterial aufweist, das in dem organischen Bindemittel homogen verteilt ist. Die mit dem erfindungsgemässen Verfahren hergestellte Brandschutzplatte enthält keine intumeszierenden Stoffe.

## Patentansprüche

1. Verfahren zur Herstellung einer organisch gebundenen, flexiblen Brandschutzplatte (21) mit einem anorganischen Füllstoff (12), **gekennzeichnet durch** die Schritte:
Einbringen einer definierten Menge einer aufschäumbaren, organischen Bindematrix (5), in eine als Plattenform ausgebildete Werkzeugform (1);
danach gleichmässiges Verteilen der organischen Bindematrix (5) auf dem Boden (2) der Werkzeugform (1);
anschliessend Auffüllen der Werkzeugform (1) mit einer adäquaten Menge eines anorganischen Füllstoffs (12);
danach Schliessen der Werkzeugform (1) mit einem Deckel (16) unter Verringerung des Volumens des Innenraums der Werkzeugform (1);
danach Aufschäumen der organischen Bindematrix (5); und
anschliessend Öffnen des Werkzeugs (1) und Entnehmen der Brandschutzplatte (21).

2. Verfahren nach Anspruch 1, **dadurch gekennzeichnet, dass** zur Steuerung des Aufschäumens der organischen Bindematrix (5) die Werkzeugform (1) temperiert wird.

3. Verfahren nach Anspruch 1 oder 2, **dadurch gekennzeichnet, dass** als organische Bindematrix (5) ein Polymer, verwendet wird.

4. Verfahren nach Anspruch 3, **dadurch gekennzeichnet, dass** als organische Bindematrix (5) ein Polyurethan oder Phenolharz verwendet wird.

5. Verfahren nach einem der Ansprüche 1 bis 4, **dadurch gekennzeichnet, dass** vor dem Einbringen der organischen Bindematrix (5) und/oder nach dem Einbringen der organischen Bindematrix (5) und/oder nach dem Auffüllen der Werkzeugform (1) mit dem anorganischen Füllstoff (12) eine Gewebe-, Gewirke- oder Vliesmatte in der Werkzeugform (1) verlegt wird.

6. Verfahren nach Anspruch 1, **dadurch gekennzeichnet, dass** die definierte Menge der aufschäumbaren, organischen Bindematrix (5) mittels eines Dosiersystems (4) in die Werkzeugform (1) eingebracht wird.

## Claims

1. Process for the production of an organically bound, flexible fire-resistant panel (21) with an inorganic filler (12), **characterized by** the following steps:
pouring a defined quantity of a foamable organic binder matrix (5) into a mould (1) configured as a panel mould;
then uniformly distributing the organic binder matrix (5) over the bottom (2) of the mould (1);
next, topping up the mould (1) with an adequate quantity of an inorganic filler (12);
then closing the mould (1) with a lid (16), thus reducing the volume of the interior of the mould (1);
then foaming the organic binder matrix (5); and
finally, opening the mould (1) and removing the fire-resistant panel (21).

2. Process according to Claim 1, **characterized in that** the mould (1) is temperature controlled in order to control the foaming of the organic binder matrix (5).

3. Process according to Claim 1 or Claim 2, **characterized in that** a polymer is used as organic binder matrix (5).

4. Process according to Claim 3, **characterized in that** a polyurethane or phenolic resin is used as organic binder matrix (5).

5. Process according to any one of Claims 1 to 4, **characterized in that** before the organic binder matrix (5) is poured, and/or after the organic binder matrix (5) is poured, and/or after the mould (1) is topped up with the inorganic filler (12), a woven, knitted or non-woven mat is laid in the mould (1).

6. Process according to Claim 1, **characterized in that** the defined quantity of foamable organic binder matrix (5) is poured into the mould (1) by means of a metered feed system (4).

## Revendications

1. Procédé de fabrication d'un panneau ignifuge souple à liants organiques (21) comprenant une matière de charge inorganique (12), **caractérisé par** les étapes suivantes : introduction d'une quantité définie d'une matrice de liant organique moussable (5) dans un moule (1) conformé en plate-forme ; puis répartition uniforme de la matrice de liant organique (5) sur le fond (2) du moule (1) ; ensuite remplissage du moule (1) avec une quantité adéquate d'une matière de charge inorganique (12) ; puis fermeture du moule (1) avec un couvercle (16) en réduisant le volume de l'espace intérieur du moule (1) ; puis moussage de la matrice de liant organique (5) ; et ensuite ouverture du moule (1) et retrait du panneau ignifuge (21).

2. Procédé selon la revendication 1, **caractérisé en ce que**, pour réguler le moussage de la matrice de liant organique (5), le moule (1) est équilibré en température.

3. Procédé selon la revendication 1 ou 2, **caractérisé en ce que** la matrice de liant organique (5) employée est un polymère.

4. Procédé selon la revendication 3, **caractérisé en ce que** la matrice de liant organique (5) employée est un polyuréthanne ou une résine phénolique.

5. Procédé selon une des revendications 1 à 4, **caractérisé en ce qu'**une nappe tissée, tricotée ou non tissée est disposée dans le moule (1) avant l'introduction de la matrice de liant organique (5) et/ou après l'introduction de la matrice de liant organique (5) et/ou après le remplissage du moule (1) avec la matière de charge inorganique (12).

6. Procédé selon la revendication 1, **caractérisé en ce que** la quantité définie de matrice de liant organique moussable (5) est introduite dans le moule (1) au moyen d'un système de dosage (4).
